# EUROPEAN PATENT SPECIFICATION

(11) **EP 1 041 871 B1**
(45) Date of publication and mention of the grant of the patent: **21.10.2009**
(21) Application number: 98960827.8
(22) Date of filing: 09.12.1998
(51) Int. Cl.: A01C 15/00, A01D 34/82, A01D 34/00

(54) **MULTIPLE BLADE BRUSH-CUTTING MOWER**
BUSCHMÄHER MIT MEHREREN MESSERN
FAUCHEUSE-DEBROUSSAILLEUSE A LAMES MULTIPLES

(30) Priority: 09.12.1997 US 69109 P; 26.02.1998 US 76101 P; 09.02.1998 US 11589
(43) Date of publication of application: 11.10.2000
(73) Proprietor: Environmentally Sensitive Vegetation, LLC, Jefferson, NC 28640 (US)
(72) Inventor: Burch, Thomas B., Wilkesboro, North Carolina 28697 (US)
(74) Representative: von Kreisler Selting Werner
(86) International application number: PCT/US1998/026064
(87) International publication number: WO 1999/029153

(56) References cited:
- EP-A- 0 262 285
- US-A- 3 090 187
- US-A- 3 942 308
- US-A- 4 926 622
- US-A- 5 189 869
- US-A- 5 195 308
- US-A- 5 237 803
- US-A- 5 329 782
- US-A- 5 657 620

## Description

### FIELD OF THE INVENTION

The present invention relates to a mower according to the preamble of claim 1. More particularly, the invention relates to a multiple cutting blade mower that may be attached to the front end or the rear end of a standard tractor, and may simultaneously cut and apply a treatment fluid to the cut, open stems of the cut vegetation.

### BACKGROUND

Mowers are particularly useful for cutting grass, for clearing brush, for maintaining fields, and for performing many other landscaping functions. Because tractors can operate in virtually any terrain, it is desirable to attach a mower to a tractor. Brush-cutting mowers are used extensively to clear vegetation from large tracts of land. Large single blade brush-cutting mowers are well known in the art, and are typically integrally attached to the rear end of a specially manufactured tractor.

In one particular application, brush-cutting mowers are used to cut vegetation growing in powerline right-of-ways. The vegetation in a powerline right-of-way must be periodically cut to maintain access to the powerlines and to minimize energy losses from the powerlines. Access is required to facilitate service and repair of the powerlines. Excessive energy losses may occur when high, dense vegetation beneath the powerlines draw electricity out of the overhead powerlines. In another application, brush-cutting mowers are periodically used to cut the vegetation that grows in medians and along roadways. Cutting the vegetation in those areas improves visibility and provides a shoulder along the road for emergency stops and for pedestrian and bicycle traffic. Another application is on pipeline rights-of-way above pipelines, where vegetation may interfere with pipeline walkovers and aerial inspections. The ability to cut, and simultaneously apply treatment fluids to the root system of vegetation, to kill or reduce the growth of vegetation within powerline rights-of-way, is highly beneficial for reducing costs of pipeline inspections.

Existing brush-cutting mowers, as described for example in US-A-5 657 620, either have a relatively expensive single blade that approximates the width of the tractor to which it is attached or have a relatively inexpensive single blade that is considerably narrower than the width of the tractor to which it is attached. Neither of those options provide an adequate means for clearing vegetation from a parcel of land.

A longer blade results in an increased cut path and thereby reduces the number of passes the tractor operator needs to make to clear vegetation from a parcel of land. However, blades this large are very heavy and very difficult to manufacture. The size of the blade makes repair and maintenance of the brush-cutting mower expensive and time consuming. Because of the heavy weight of the blade, more than one person is required to remove the blade from the mower. Consequently, either more workmen must be provided at every job site or the operator must wait for help to arrive before necessary repairs can be made. This leads to a significant increase in the cost of operating existing brush-cutting mowers.

Large blades are also exponentially more expensive to manufacture. Consequently, the blade is a relatively expensive component of the brush-cutting mower.

The considerable weight of a large blade also necessitates a significant amount of power to operate the blade. Consequently, relatively heavy and expensive power sources are needed to provide sufficient power to operate the blade. Power sources of this magnitude are exponentially more expensive than smaller power sources. Thus, it is desirable for the blade to be as light as possible to reduce the mower's power requirements while not affecting its ability and durability when cutting from three inch to six inch basal diameter trees.

Using a brush-cutting mower that has a smaller blade and thus a narrower cut path are equally inefficient. When the cut path is narrower than the width of the tractor the mower is attached to, the mower operator must make overlapping passes when clearing vegetation from a parcel of land. While there are considerable savings from operating a smaller blade, these gains are off-set by the increases in the time and cost required to clear the parcel of land.

A need, therefore, exists for a relatively inexpensive brush-cutting mower that can cut a path at least as wide as the tractor to which it is attached, and that can apply treatment fluid to the cut brush and vegetation, preferably in one pass over the cutting path.

Another drawback of existing single blade brush-cutting mowers is the lack of consistent blade exposure. Typically, the housing of an existing brush-cutting mower includes a deck having a clam shell portion. When the brush-cutting mower is not in operation, the deck completely covers the blade. When the brush-cutting mower is in operation, the clam shell portion of the deck is moved away from the blade, and a portion of the blade is exposed. The configuration of the clam shell portion and the circular path of the blade prevent uniform blade exposure for brush to be cut off-center of the forward or rearward path of the axis of the blade. Consequently, existing single blade brush-cutting mowers can be cumbersome to operate and may require multiple passes to obtain equivalent cut-height for a cleared pathway through brush.

Another problem with existing brush-cutting mowers is that the mowers are mounted to the rear end of the tractor. Consequently, the tractor contacts the vegetation prior to the blades on the mower. The weight and force of the tractor typically bends or compresses the vegetation down. As a result, the blade will be unable to cut many of the stems of the vegetation. Therefore, the bent and uncut vegetation will not be cut by the blade as the mower itself passes over the already bent over stem.

Furthermore, because the mower operator faces forward, he has less control over the path of the mower blade. Finally, when the tractor turns the rear mounted mower does not take the same path as the tractor. Numerous problems arise when the tractor path does not correspond to the path of the blade.

Because the tractor encounters the vegetation before the blades can cut the vegetation, the tractor must have sufficient power to run over the vegetation, and to drag a mower blade housing over the brush. Thus, in areas where the brush is particularly thick, the power requirements of the tractor may increase dramatically. Because of the density of the brush is typically unknown in a given job, most existing mowers use large expensive tractors having large horsepower capabilities to perform even the simplest jobs.

In addition, existing mowers may have herbicide spraying capabilities added to the front or rear of the mower, or associated with the mowing blades, but existing blade and spray configurations allow for indiscriminate spraying of treatment liquids onto the outer surfaces of vegetation and onto the ground, requiring spray applications of 20 gallons/acre or more of vegetation sprayed while contributing to "run-off" of excess fluids into streams and lakes.

While turf mowers having multiple blades are known, there are no known brush-cutting mowers that utilize small multiple blades that are belt driven and that have a similar configuration as the present invention, allowing simultaneous application of treatment fluid during cutting of brush and vegetation.

### SUMMARY OF THE INVENTION

The present invention as characterized in claim 1, is a multiple blade brush-cutting mower for clearing and cutting vegetation and selective application of vegetation treatment fluid into cut pores of vegetation at the time of first cutting for transport throughout the vegetative mass by a natural translocation process. The invented brush-cutting mower is attachable to either the front end or the rear end of a standard tractor. The brush-cutting mower provides consistent blade exposure over an area at least as wide as the width of the tractor to which it is attached. One embodiment, a three blade configuration, clears vegetation efficiently at a substantially lower cost than existing single blade brush-cutting mowers. Further, because the present invention incorporates relatively small light-weight blades, it is easier to perform maintenance on the invented mower. In addition, the multiple blade brush-cutting mower incorporates a treatment fluid dispenser system that applies treatment fluid directly onto the lower surface of each cutting blade, maintains the fluid on the lower surface for simultaneous application of the fluid from each blade at the moment of cutting onto the cut, open ends of the cut vegetation and brush, with the treatment fluid sucked into the vascular system of the vegetation for delivery to the roots of the plants by natural translocation processes, described also as the "Burch effect".

The brush-cutting mower for clearing brush, cutting vegetation, and applying vegetation treatment fluid to cleared land, includes a mower having a convertible deck, the convertible deck having a main deck and a clam shell portion, with the clam shell portion forwardly attachable to said main deck. A distal edge of the main deck, is attachable to the clam shell portion at a radiused proximal edge of the clam shell portion, the claim shell portion extends beyond the radiused distal edge of the main deck. Underneath the main deck, a plurality of spindles are mounted, with one of each of a plurality of cutting blades mounted to each spindle. The mower includes a means for rotating the plurality of cutting blades, and an attachment means for selectively securing the mower to either a front end or rear end of a standard tractor. The mower includes a means for applying treatment fluid from the lower surfaces of each cutting blade to cut brush and cut vegetation, the applying means administering treatment fluid simultaneously to the cut, open pores of vegetation as the brush and vegetation is cut. The cutting blades form a continuous blade path at least as wide as the width of the mower, with the treatment fluid applied from the lower surfaces of each of the plurality of cutting blades to the cut, open ends of vegetation. The treatment fluid is applied simultaneously from the lower surfaces of the cutting blades at the time of cutting, without application of fluid to the exterior sides of brush and vegetation, nor onto the ground, nor into surrounding air, surface water, or groundwater.

Therefore, a relatively inexpensive brush-cutting mower is provided that can cut a path at least as wide as the tractor to which it is attached, and that can apply treatment fluid to the cut brush and vegetation at the same time as the brush and vegetation is cut, allowing only one pass over the cutting path for cutting and treatment of brush and vegetation.

### OBJECTS OF THE INVENTION

Accordingly, an object of the present invention is to provide an apparatus for efficiently cutting and treating vegetation.

A further, and more particular, object of the invention is to provide a multiple blade brush-cutting mower that provides a consistent blade exposure.

Another object of the invention is to provide a brush-cutting mower having a cut-path width as wide as the tractor width.

An additional object of the invention is to provide a brush-cutting mower that can be attached to either the front end or the rear end of a commonly used tractor.

An additional object of the invention is to provide a mower that is easily maintained by adequately trained maintenance crew.

An additional object of the invention is to provide simultaneous delivery of treatment fluid from the cutting blades to cut ends of vegetation as brush and vegetation is cut.

### BRIEF DESCRIPTION OF THE DRAWINGS

In view of these and other objects which will more readily appear as the nature of the invention is better understood, the invention consists in the novel combination and arrangement of parts hereinafter more fully described, illustrated and claimed with reference being made to the attached drawings, in which:
FIG. 1 is an isometric view of a multiple blade brush-cutting mower according to the invention;
FIG. 2 is a top view of the multiple blade mower;
FIG. 3 is a rear view of the multiple blade mower;
FIG. 4 is a side view of the multiple blade mower;
FIG. 5 is a front view of the multiple blade mower;
FIG. 6 is a bottom view of the multiple blade mower;
FIG. 7 is an isometric view of the multiple blade mower attached to the front end of a tractor;
FIG. 8 is an isometric view of the multiple blade mower attached to the rear end of a tractor;
FIG. 9 is an isometric view of another embodiment for wheel placement for the multiple blade mower;
FIG. 10 is a side view of the central spindle, central blade shaft, and the fluid dispenser bar;
FIG. 10a is an exploded side view of the central portion of the central blade spindle;
FIG. 11 is a top view of the fluid dispenser bar;
FIG. 12 is an elevation lower view of a cutting edge of a blade;
Fig. 13 is a perspective view of stacked recyclable containers of the fluid distribution system of the present invention; and
Fig. 14 is a flow diagram of the fluid storage, transfer, and distribution system of the present invention.

### DETAILED DESCRIPTION

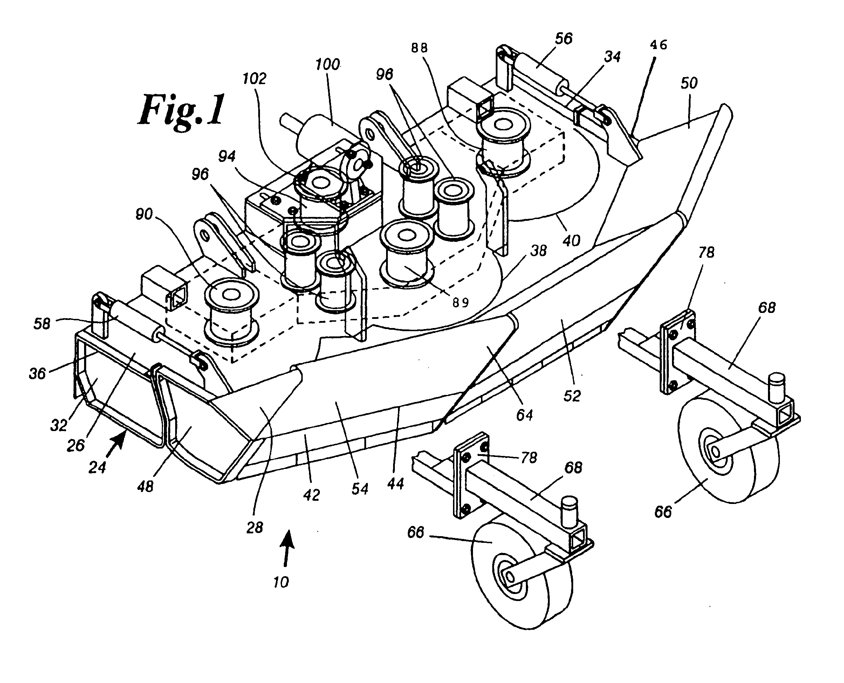

Referring now to the drawings, FIGS. **1** - 9 show the invented multiple blade brush-cutting mower **10** for clearing vegetation from a parcel of land, and for applying treatment fluid to cut vegetation at the time of cutting of the vegetation. The invented brush-cutting mower **10** is a unit attachable to either the front end **12** or the rear end **14** of a standard tractor **15.** The brush-cutting mower **10** provides consistent blade exposure over an area at least as wide as the width of the tractor **15** to which it is attached. The mower **10** may have as few as one or two pairs of blades, or as many as five, seven, or nine pairs of blades placed across the mower and grouped in mower extension wings (not shown) on either side of the mower **10.**

### Mower Mechanical Features

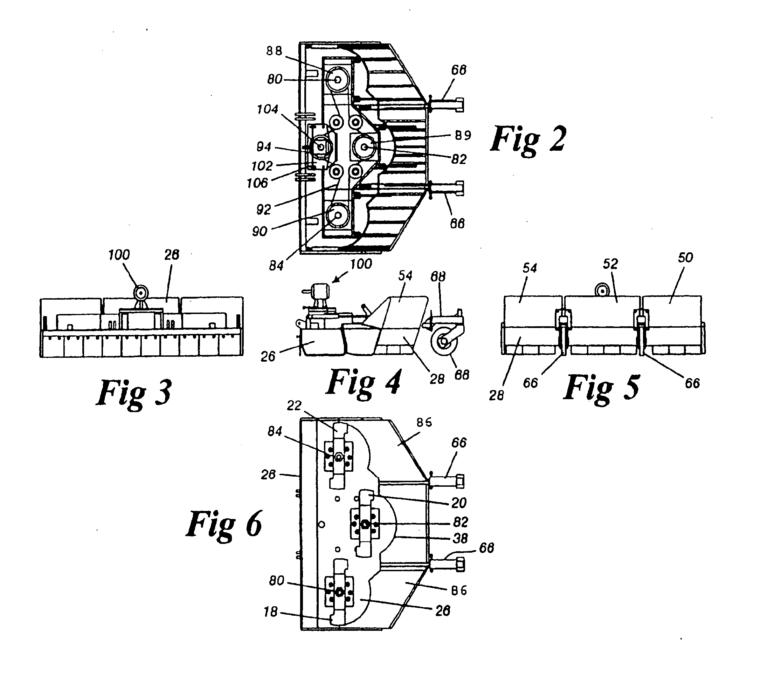

The invented brush-cutting mower **10** includes in one embodiment three pairs of blades **18, 20, 22** mounted under a convertible deck **24** on separate spindles **80, 82, 84** positioned on the underside **86** of the main deck **26** (see FIG. 6). The convertible deck **24** includes a main deck **26,** a clam shell portion **28** forwardly mounted to a distal, portion **30** of the main deck **26,** and a rigid skirt **32** which extends downwardly from the side edges **34, 36** of the main deck **26.** The main deck **26** has a distal edge **38** which is radiused. The clam shell **28** has a radiused proximal edge **40** which generally mirrors the distal edge **38** of the main deck **26.** The proximal edge **40** of the clam shell **28** extends over the distal edge **38** of the main deck **26.** The clam shell **28** also has a continuous flexible safety skirt **42** which extends down from the linked clam shell sections **50, 52, 54** and both side edges **46, 48** of the clam shell **28** (see FIG. 1 and 5).

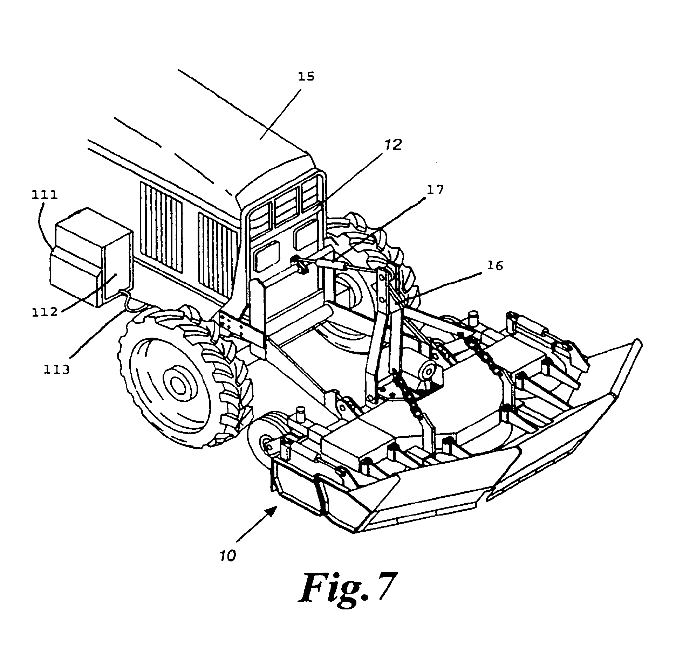

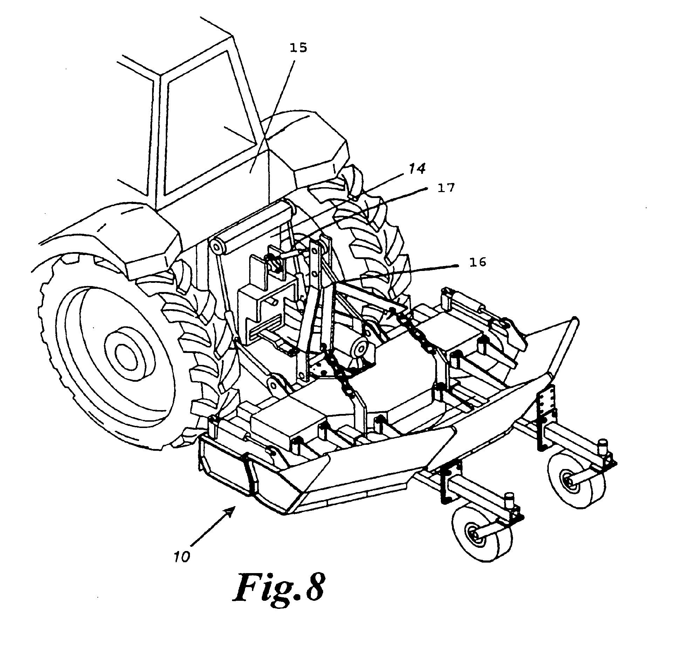

Preferably, the main deck may be positioned at variable heights above the ground, with the three-point hitch **16** connecting between the tractor **15** and the convertible deck **24** (see FIG. 7). The "top link" piston **17** of the three-point hitch **16** is a hydraulic piston that may be adjusted by the tractor operator to tilt, raise and/or lower the mower **10** as the height of the ground and/or brush varies, and to allow field access to the underside of the deck for maintenance. The attachment of the mower **10** to the front end **12** of the tractor **15,** is preferred, but the three-point hitch **16** also allows the brush-cutting mower **10** to be attached to the rear end **14** of the tractor **15** if desired, as shown in FIG. 8. Attaching the brush-cutting mower **10** on the front end **12** of a tractor **15** allows the brush-cutting mower **10** to contact the vegetation before the wheels and other parts of the tractor **15.** Front-mounting of the brush-cutting mower **10** insures that the blades cut vegetation before the tractor tramples the vegetation. The brush-cutting mower **10** may be moved between the front end **12** and the rear end **14** of the tractor **15** with relative ease, providing flexibility for attachment of the brush-cutting mower. Attaching the brush-cutting mower on the front end of a tractor also provides the operator with a true correlation between the movement of the tractor and the cut path of the blades and allows the operator to have a true perspective of what is being cut, thereby improving the operability of the brush-cutting mower. Finally, front-mounting the brush-cutting mower allows the brush-cutting mower to be operated with a relatively less powerful tractor.

Together, the multiple pairs of blades provide a cutting path at least as wide as the wheel pattern of the tractor. In a preferred embodiment, the pairs of blades each have a diameter of approximately eighty four (**84**) centimeters (approximately thirty-three (33) inches) and, thus, do not need flying saucer stump guards placed under the bolts for protection as are required for existing "bush-hog" type BURCH WET BLADE^{®}s. The left blade and the right blade are equidistant to the front end of the tractor, and the center blade is positioned equidistant between the left and right blades. The center blade pair is positioned slightly further forward on the main deck than the left or right blades. The center blade pair is partially covered by the front curved clamshell distal edge **38** (see FIG. 1 and 6), with the center blade pair extending forward past the curved clamshell distal edge **38** cover. For cutting of thick vertical brush, or small trees, the clamshell cover may be raised by the twin hydraulic cylinders **56, 58** located on the upper sides of the main deck **26** and attached to **50**, left section and **54,** right section. The center blade pair may be exposed forward of the mower **10** to allow for cutting into and through a small tree without the need to bend the tree over. Treatment fluid is dispensed onto the cut open pores from lower surfaces of each of the cutting blades, at the moment of cutting, as discussed below.

A spindle pulley is positioned on each of the three spindles. The three spindle pulleys are driven by a single belt for ease of operation and for ease of repair. The driven belt is positioned around the three spindle pulleys and a fourth driver pulley. The driver pulley is spaced from the center spindle pulley and both the driver pulley and the center spindle pulley are positioned equidistant between the left and right spindle pulleys. The driver pulley is proximally positioned with respect to the center spindle pulleys. Four idler pulleys are also preferably included to help guide and control the belt. Preferably, an idler pulley is positioned between each of the four main pulleys. In an alternative embodiment, multiple belts are used instead of just one. The two belts or more belts rotate the spindles such that the blade tip speed is up to approximately 322 kmh (200 mph) from a output of 50 to 75 horsepower. A minimum blade tip speed of approximately 177kmh (110 mph) is possible with adequate operation of the pairs of cutting blades. The maximum preferred blade tip speed is approximately 5800 meters per minute (19,000 feet per minute), with the minimum preferred blade tip speed of approximately 4570 meters per minute (15,000 feet per minute).

The invented serpentine drive apparatus enables the blades to be operated at an uniform speed. Furthermore, only one power take off is required to operate all three, or more, blades. In a preferred embodiment, the gear box is positioned over the driver pulley and is mounted on a movable mounting plate. The driver spindle is also secured to the mounting plate and is in engagement with the gear box. A U-shaped bracket secures the mounting plate to the main deck. The U-shaped bracket can be removably positioned such that the driver spindle can be positioned at various distances from the center spindle pulley. Thus, when a belt begins to stretch out, the driver pulley can be moved away from the center spindle pulley thereby tightening the belt.

When the invented brush-cutting mower is in operation, the clam shell is moved to an open position in which it provides a consistent blade exposure. When the brush-cutting mower is not in operation, the clam shell is biased in a closed position in which the clam shell completely covers the distal portion of the three rotating blades which are exposed when the clam shell is in the open position. However, when the brush-cutting mower is not in operation, the clam-shell can be opened to expose the cutting chamber and blades for maintenance and repair.

### Detailed Embodiment of Mechanical Features

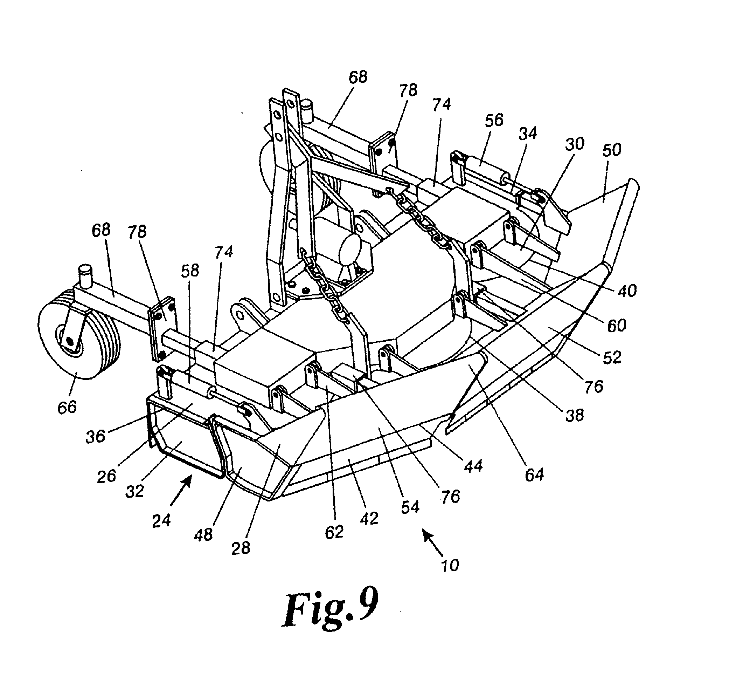

Preferably, the clam shell portion **28** is separated into three sections: a left section **50**, a center section **52,** and a right section **54.** The entire clam shell portion **28** is movable and operated with twin hydraulic cylinders **56, 58.** A left hydraulic cylinder **56** is positioned between the main deck **26** and the left section **50,** and a right hydraulic cylinder **58** is positioned between the main deck **26** and the right section **54**. A slave or linkage **60** connects left section **50** to center section **52,** and another slave or linkage **62** connects right section **54** to center section **52,** and moves the three sections simultaneously between the open and closed positions (FIG. 9). A pushover bar **64** is positioned in a distal portion of the brush-cutting mower **10.** The pushover bar **64** uses the forward momentum of the tractor **15** to bend brush downwardly before the blades contact the brush when the clam shell is closed or partially closed (FIG. 9).

In a first embodiment, the invented brush-cutting mower **10** also includes gauge wheels **66** positioned underneath the main deck **26** or mounted on removable extensions **68.** The wheels **66** provides additional support and provide blade height adjustment when the brush-cutting mower **10** is operated over uneven terrain. The height of the wheels **66** may be adjusted by the operator, or may be connected to a computer controlled hydraulic "draft control" system (not shown) available on many tractors. The "draft control" system utilizes electronic sensors to measure the slip of each drive wheel, and the load on each drive wheel as variable with the irregular surface of terrain, for computer assisted adjustments to the height of the attachment to a tractor, such as height adjustments for a mower in relation to irregular surfaces. The wheel extensions **68** are securable to brackets in the distal and proximal portions of the main deck **26.** When the mower **10** is attached to the front end **12** of the tractor 15, the extensions **68** may be secured to proximal brackets **74,** and the wheels **66** are positioned behind the brush-cutting mower **10.** When the brush-cutting mower **10** is attached to the rear end **14** of the tractor **15**, the extensions **68** are preferably secured to the distal brackets **76,** and wheels **66** are positioned behind the brush-cutting mower **10.** As a result, the wheels **66** can operate without obstructing the cutting path of the mower blades regardless of the orientation of the brush-cutting mower **10** with respect to the tractor **15**. Adjustment brackets **78** may be used to adjust the height of gauge wheels **66** with respect to the main deck **26.**

The invented brush-cutting mower **10** includes multiple pairs of blades, with one embodiment utilizing three pairs of blades **18, 20, 22** each mounted on separate spindles **80, 82, 84** positioned on the underside **86** of the main deck **26** (FIG. 6). Together, the three blades **18, 20, 22** provide a cutting path at least as wide as the wheel pattern of the tractor **15.** In a first embodiment, the blades each have a diameter of approximately eighty-four (**84**) centimeters (thirty-three (33) inches) and, thus, do not need flying saucer stump guards placed on the bolts for damage protection. The left blade **18** and the right blade **22** are equidistant from the front end **12** of the tractor **15.** The center blade **20** is positioned equidistant between the left and right blades **18, 22.** The center blade **20**, however, is positioned slightly further forward on the main deck **26** than the left or right blades **18, 22.** As a consequence, the three blades **18, 20, 22** provide the brush-cutting mower **10** with an unbroken cutting path.

A means for rotating the three blades **18, 20, 22** includes a spindle pulley positioned on each of the three spindles. The three spindle pulleys **88, 89, 90** are driven by a single belt **92** for ease of operation and for ease of repair. The belt is positioned around the three spindle pulleys and a fourth driver pulley **94.** The driver pulley **94** is spaced from the center spindle pulley **89** and both the driver pulley **94** and the center spindle pulley **89** are positioned equidistant between the left and right spindle pulleys **88, 90.** The driver pulley **94** is proximally positioned with respect to the center spindle pulleys **89.** Four idler pulleys **96** are also preferably included to help guide and control the belt **92** (FIG. 1). Preferably, an idler pulley is positioned between each of the four main pulleys. The spindle pulley is in communication by a belt or pulley to each spindle **80, 82, 84,** with each spindle attachable to a respective blade, for synchronized rotation of each spindle and each pair of cutting blades **18, 20, 22.**

The one-belt drive apparatus enables the multiple pairs of cutting blades **18, 20, 22** to be operated at an uniform speed. The belts absorb shock or short-term delays in power, as created when the tractor and mower traverse rough terrain, with the transfer of constant rotational power transmitted to the multiple rotating spindles, eliminating a slip clutch. Furthermore, only one power take off is required to power the gear box **100** for turning the belts in communication with the multiple blades **18, 20, 22.** In a first embodiment, the gear box **100** is positioned over the driver pulley **94** and are mounted on a movable mounting plate **102.** A driver spindle **104** is also secured to the mounting plate **102** and is in engagement with the motor and gear box **100.** A U-shaped bracket **106** secures the mounting plate **102** to the main deck **26.** The U-shaped bracket **106** can be removably positioned such that the driver spindle **104** can be positioned at various distances from the center spindle **82.** Thus, when the belt **92** begins to stretch out, the driver spindle **104** can be moved away from the center spindle **82** thereby tightening the belt **92.** The belt may be constructed of nylon or rubber with kevlar or other reinforcement, and/or high heat rated materials.

### Treatment Fluid Distribution System

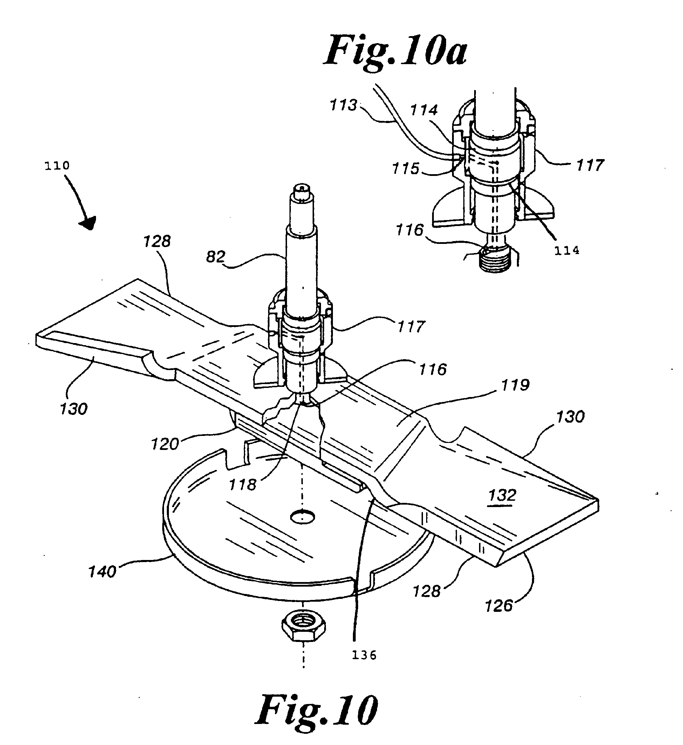

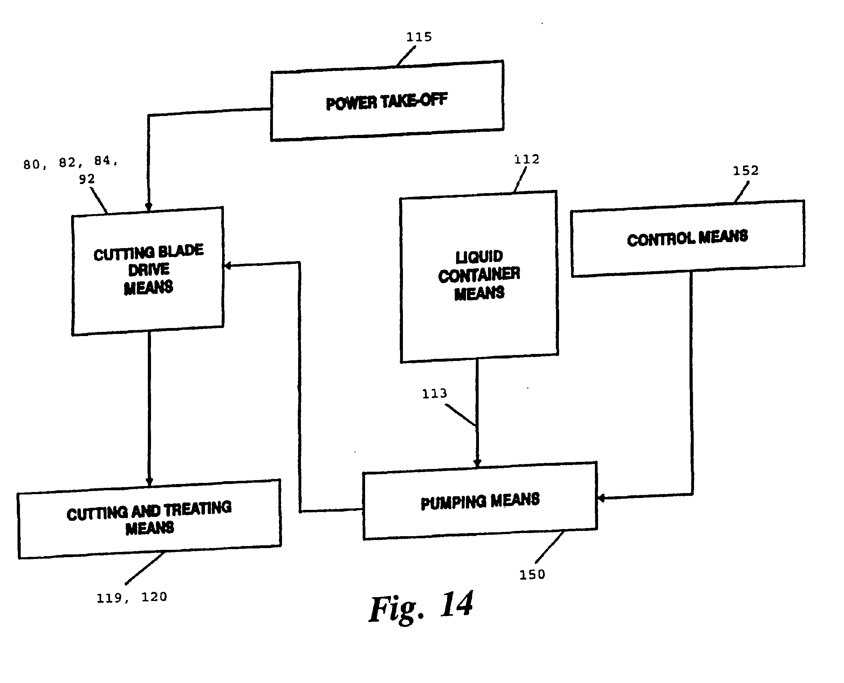

The triple blade **18, 20, 22** brush-cutting mower **10** utilizes a treatment fluid distribution system **110** for the storage, transfer, and direct application of various treatment fluids (herbicides, fertilizers, growth regulators, etc.) to vegetation at the initial first cutting. This completely closed fluid treatment system includes three or more spindles **80, 82, 84,** and a plurality of pairs of blades connected by a central, generally horizontal, blade shaft **119.** Referring to FIGS. 6, 7, and 10-14, the fluid distribution system includes the main components of at least one storage container **112**, at least one peristaltic pump (not shown), a constant flow of treatment fluid from the container **112** through tubing to the upper end of spindles **80, 82, 84,** conduits for fluid from the spindles into a fluid dispenser bar **120** for each pair of blades, and exit ports (two) for each bar **120** that place treatment fluid near the leading edge of the lower surface of each pair of blades. Each fluid dispenser bar **120,** known as the BURCH WET BLADE^{®} system (FIGS. 10-14), is attachable underneath and parallel to a respective central blade shaft **119.** Each dispenser bar **120** is protected from flying objects, stationary rocks, and stumps by a lower cover plate **140,** or "stump guard" that fits over the dispenser bar **120** and the central portion of the central horizontal blade shaft **119.**

As the pairs of blades **18, 20, 22** cut the stems of the vegetation or brush, the fluid treatment system simultaneously applies a treatment fluid from the lower surface of each cutting blade to the cut, open stem ends at the fleeting moment of the first cutting of stems as the stems travel across the wet lower surfaces of each of the cutting blades **18, 20, 22.** Applying treatment fluid at the exact moment that the integrity of the stems are breached, allows placement of fluid into the cut pores of the translocation system of vegetation as the downward force of gravity pulls the internal fluids of the plant down into the plant, therefore the treatment fluid is sucked immediately into the pores and internal cells of the vascular system of the plant. The method of application of treatment fluids by the invented treatment fluid application system provides for application of treatment fluids at the time of initial cutting into the pores of the vascular system of vegetation with quick delivery of fluids to the roots of plants, without wastage of treatment fluids from excess application to the ground, or the exterior surfaces of plants.

### Detailed Embodiment of Fluid Distribution System

In a first embodiment, the invented multiple blade brush-cutting mower utilizes a fluid treatment system **110** for the direct application of various treatment fluids (herbicides, fertilizers, growth regulators, etc.) into the cut ends of vegetation, the fluid treatment system includes storage, transfer, and the BURCH WET BLADE^{®} system. The BURCH WET BLADE^{®} system dispenses fluid from a fluid dispenser bar **120** near each cutting edge and onto the lower surface of each cutting blade **18, 20, 22.** The treatment fluid is taken up, and absorbed into each cut, open end of vegetation and brush at the moment of initial cutting, when the vegetation is in contact with the lower surface of each cutting blade. The treatment fluid applied from each blade is applied at the instant of first cutting, to only the cut open pores of the vegetation. During the fleeting moment after first cutting, the applied treatment fluid is sucked down into the exposed cut pores of the vegetation stems and into the vascular system of a plant, thereby allowing the rapid distribution of treatment fluid throughout the plant and into the roots of the plant, avoiding past practices of only superficial application of herbicides and pesticides to the exterior surfaces of vegetation or wiping on after vegetation is cut. The BURCH WET BLADE^{®} system provides for the placement of fluids into the cut open ends of vegetation, without dispensing fluid onto the outer uncut surfaces of vegetation, and without dispensing fluid onto the ground around cut vegetation. The lack of broad application of treatment fluids reduces wastage, reduces groundwater contamination and treatment fluids runoff into surface water, and minimizes use of fluids in the range of about 0.94 liters/acre (0.25 gallons/acre) to about 4.73 liters/acre (2.5 gallons/acre). If approximately 95% of the applied treatment fluids are water, with approximately 5% being active toxic ingredients, the actual application of toxic chemicals is reduced well below manufacturer' s suggested spray rates for foliage application of actual toxic chemicals per each acre, calculating from the higher rate of application of approximately 7.57 to 9.46 liters (2 to 2 1/2 gallons) of treatment fluids applied per each acre (0,405ha) mowed.

The fluid treatment system includes a reservoir of treatment fluid stored in recyclable containers **112** positioned in a magazine **111** preferably mounted on the tractor **15.** The containers include at least two FLO-THRU CELLS'" **112, 112'** so that the level of the treatment fluid does not fall below the level of the outlet of the lowermost cell regardless of the orientation of the cutting blades of the mower relative to the FLO-THRU CELLS'" **112, 112'.** The use of a plurality of FLO-THRU CELLS^{™} **112, 112'** permits an area to be treated at one time which would otherwise be too large to be correctly treated with a single fluid container cell. Further, the use of a plurality of FLO-THRU CELLS^{™} **112, 112'** permits a large area to treated at one time without the need to repeatedly discontinue the cutting and treating operation to refill a single large fluid treatment container. Instead, the upper FLO-THRU CELLS^{™} **112, 112'** may be readily removed and replaced with additional pre-filled cells without washing or rinsing. The empty FLO-THRU CELL^{™}s are recyclable and refillable and once empty, are returned eliminating disposal by normal means.

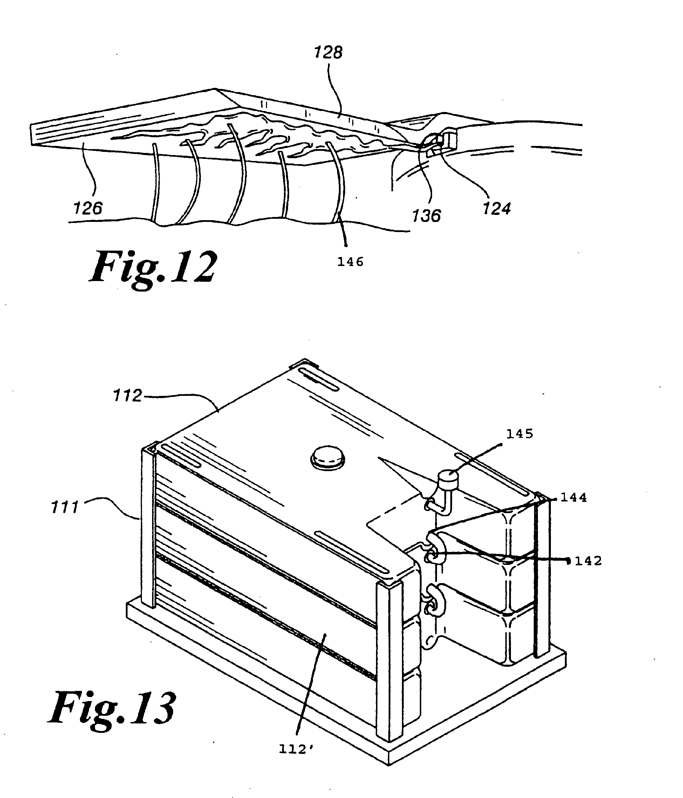

The reservoir of treatment fluid, namely a plurality of recyclable containers **112,** and **112'** (Fig. 13), includes the following features: an inlet port **142,** an outlet port **144,** a shutoff fitting (not shown) for each port, a fill opening in the top of the container. A breather cap **145** is connected to a conduit attached to the top most inlet port permitting an equal volume of air to replace the liquid as it is dispensed or "flows through" the stack of cells. The multiple ports **142, 144** provide for interconnecting of a plurality of tubing leading to additional containers **112'** with the shutoff fitting (not shown) providing for the cutoff of flow from one container, while other containers **112** continue to feed treatment fluids to the fluid dispenser bar **120.** The breather cap **145** provides for ambient air to enter the fluid container **112,** so that a partial vacuum does not develop and inhibit flow of treatment fluid as the pump (not shown) extracts treatment fluid from the container **112.** The use of a plurality of magazines loaded with a plurality of FLO-THRU CELLs **112, 112'** allows for different herbicides, fertilizers, growth regulators, etc.), to be loaded into separate containers, with interconnecting of the conduits to the pump, to provide the operator of the tractor and controller of the fluid treatment system **110** to mix and match multiple treatment fluids depending on the type of vegetation or brush that is being cut and treated simultaneously. The interchangability of the recyclable, reusable, and refillable containers **112** may have applications in additional fields where different fluid solutions from separate cells are then mixed together. The interchangability of the containers **112** allows for fluids to not be mixed together until the time of application, which extends the shelf-life of prepackaged fluids, when mixing to form a more active treatment liquid is delayed until immediately before the application of the treatment liquids. The containers **112, 112'** may be generally rectangular, or square, with rounded corners, and two extensions on one end, to allow for stacking of the containers two, three, or more containers high (see FIG. 13).

The fluid treatment system **110** also includes a peristaltic pump (not shown) that accurately meters the ultra-low volume delivery of treatment fluid. Pump comprises any type of variable capacity pump for pumping widely varying amounts of the treatment fluid depending on the speed of the mower over the surface of the ground, as will be described. Preferably, however, pumping means **150** is a peristaltic pump of the type available from TAT Engineering of Branford, Connecticut, which pumps the treatment fluid through fluid conduits via waves of contraction of the pumping means **150** at a pressure of approximately 3.54 kg/cm² (5 psi) produced mechanically by a series of rollers compressing the flexible tubing containing the treatment fluid. Fluid transfer hoses move fluid from the storage container to the spindles **80, 82, 84,** with the hoses made of flexible rubber tubes (not shown) or of soft polyvinylchloride (PVC).

The pump delivers the treatment fluid from the FLO-THRU CELLS^{™} **112** by fluid transfer hoses **113** to a central fluid intake opening **115** for each spindle **80, 82, 84.** The intake opening is spinning with the rotating spindle, and the rotating spindle is surrounded by a stationary spindle collar or housing **117** having two middle rotational seals **114** within the interior of the spindle collar **117** forming a pocket. Fluid is transferred into the pocket between two middle seals **114** from hoses **113,** with the fluid transferring across the gap between the interior of spindle collar **117** and the midsection of the rotating spindle, into a central fluid intake opening **115** in each spindle **80, 82, 84.** The central fluid intake opening **115** accepts fluid as contained by the pocket between the middle rotational seals **114,** for continued transfer of treatment fluid down each spindle to an exit opening **116** in the spindle shaft side connectable to a central opening of the fluid dispenser bar **120,** without interacting with the lubrication used to facilitate the rotational motion of the spindles in the supporting collar or housing **117.** Each spindle has an interior conduit that transports fluid to the lower end of each spindle shaft which transfers fluid to the sloped section (25°) of the angled junction **136** of the central blade shaft **119,** which connects with the fluid dispenser bar **120.** The middle rotational seals **114** may be a rubber seal (not shown), or other seal utilized to seal a part rotating around a stationary enclosure or housing **117.**

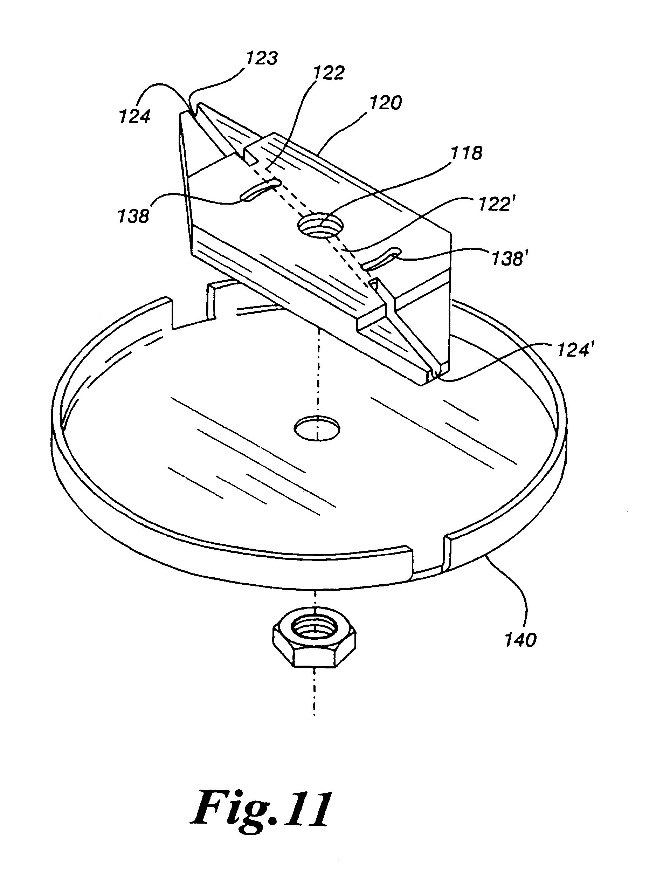

The treatment fluid moves down through each spindle by interior conduits to at least one exit opening **116** at the lower end of each spindle. The spindle shaft is connectable at the lower, distal end of the spindle shaft, through the central, preferably square, opening of the central blade shaft **119,** into the central opening of the fluid dispenser bar **120**. As the spindle rotates in conjunction with the generally horizontal central blade shaft **119,** the fluid dispenser bar **120** is located underneath each central blade shaft **119** and bar **120** rotates in concert with shaft **119.** The treatment fluid exits from at least one exit opening **116** of each spindle, into a central fluid circular groove or pocket **118** within the central cylindrical or square hole of the dispenser bar **120** (see FIG. 10 and 11).

The central fluid circular groove or pocket **118** includes a cylindrical or square gap (not shown) that encircles the exit openings **116** of the spindle when the spindle is inserted into the fluid dispenser bar **120.** The groove or pocket **118** is in fluid communication with channels **122, 122'** radiating outward from the central part of dispenser bar **120.** The fluid moves from the exit openings **116,** across the gap into the central groove or pocket area **118,** through the channels **122, 122',** through the respective tubing in each channel, and out toward the opposing corners of the parallelogram shaped, or rectangular shaped, dispenser bar **120,** via tubing **123** in each bar **120,** to the exit ports **124, 124'** that are oriented underneath the cutting/leading edge **128** of the lower surface **126** of each respective cutting blade **18, 20, 22** (see FIGS, 11 and 12). The tubing **123** in channels **122** is approximately 4,75 millimeter(3/16 inch) inside diameter, and approximately 6.35 millimeter (1/4 inch) outside diameter. The outlet or exit port **124** on each dispenser bar **120** is approximately 4.75 millimeter (3/16 inch) diameter. Each exit port **124, 124'** is oriented within approximately 12 .7 millimeter (0.5 inch) distance inward, or recessed toward the central groove or pocket area **118** of the bar **120,** from the lower angled surface of the junction **136** of the blade and the leading edge **128** of the lower **126** surface of each blade (see FIGS. 10 and 12). The distance inward may be approximately 9.5 millimeter (0.375 inch) to approximately 15.875 millimeter (0.625 inch), with 12.7 millimeter (0.5 inch) distance preferred for proper placement of fluid from each port to lower **126** surface.

The exit ports **124, 124'** are also oriented approximately in the range of approximately 9.5 millimeter (approximately 0.375 inch) to approximately 15.875 millimeter (approximately 0.625 inch) inward, to approximately 31.75 millimeter (1.25 inch) back, and preferably 25.4 millimeter (1.0 inch) back, from the leading edge **128** of each blade (see FIG. 12), to allow the distribution of the released treatment fluid to spread across the lower **126** surface of each blade without the treatment fluid spreading over the front of the leading edge **128,** limiting the treatment fluid to only the lower **126** surface and not on the upper **132** surface of the blade. The exit port **124** releases treatment fluid toward the lower **126** surface, and the treatment fluid moves to, and across the approximately 12.7 millimeter (0.5 inch) gap underneath the lower angled surface of the junction **136** of the blade, toward the leading edge **128** due to aerodynamics and air movement around the blade. The aerodynamics within approximately 12.7 millimeter (0.5 inch) gap area is determined as a function of the angle of the junction **136,** which is optimally 25 degrees, and the blade leading edge velocity, which is maintained in the range of approximately 5800 meters zeros per minute (19,000 feet per minute) and approximately 4570 meters per minute (15,000 feet per minute).

Due to the configuration of the upper surface **132** and lower surface **126** of each cutting blade, and the angled junction **136** of the blade with the central blade shaft **119,** an airfoil effect is created for each cutting blade as the blades rotate. Similar to an airplane wing, the upper surface **132** has an upwards curvature from the leading edge **128** to the upturned rear surface **132** of trailing edge **130** of each blade. As air moves across the upper **132** and lower **126** surfaces, a differential air **pressure** area is created across the lower **126** surface of each blade, partially dependent on the angle of the angled junction **136** leading to the lower **126** surface. As treatment fluid is released from each exit port **124** of fluid dispenser bar **120,** the treatment fluid spreads out over the cutting/leading edge **128,** lower surface **126,** and the **fluid** spreads out across the main surface area of lower **126** surface of each blade. The fluid remains on the lower **126** surface of each blade for a length of time dependent on the amount of lower surface air pressure created by the speed of the blades, the angle of the angled junction **136,** the size of gap (approximately 0.5 inch), and the difference between the larger surface area of the upper **134** and lower **126** surfaces of each blade. A preferred angle of the angled junction **136** is in the range of approximately 24.5° and approximately 25.5°, ideally approximately 25° for optimal distribution of fluid across the lower surface of each blade. The preferred range of blade tip speed is approximately 4570 meters per minute (15,000 feet per minute) to approximately 5800 meters per minute (19.000 feet per minute), or approximately **177** km/hr (110 mph) to approximately **322** km/hr (200 mph).

With the treatment fluid remaining on the lower **126** surface of each blade, as the individual cut vegetation stems **146,** cut brush, and/or cut small trees move across the lower **126** surface of each blade, the treatment fluid is simultaneously applied onto and absorbed directly into the cut and open ends of the vegetation, without wastage of treatment fluid onto the uncut sides of vegetation, nor on the ground or in surface water around the vegetation. Therefore the treatment fluid is applied to the cut and exposed interior vertical oriented pores of the vegetation, permitting rapid movement of treatment fluid down through the vegetation to the roots of the vegetation, as proven in field tests with operation of the mower, plurality of cutting blades, and fluid dispenser bar.

The efficiency of the fluid treatment system is demonstrated by the sparing use of treatment fluids, from approximately 0.946 liter/acre (0.25 gallons/acre) to approximately 9.46 liter/acre (2.5 gallons/acre) of treatment fluid for a total disbursement of fluids from all of the cutting blades for each acre of vegetation cut. Normal usage by a spraying or a drip-dispensing mower currently used in the industry is in the range of 75 liters/acre (20 gallons/acre) or more of fluid per each acre (0,406ha) treated.

It is demonstrated that the constant replenishment of the treatment fluid on the lower surface of each blade, and the availability of the fluid for applying to cut stems 146 at the moment that the vegetation is initially cut is critical to the efficiency of the treatment. The air flow across the lower surface creates a pressure differential, in relation to the air flow across the upper surface of the blade since the upper surface having more surface area, therefore maintaining an area of pressure differential along the lower surface which holds the treatment fluid onto the lower surface after discharge from the fluid dispenser bar's outlet ports as the blades rotate. As a film of treatment fluid is maintained across the lower blade surface, the cut ends of brush and vegetation are either in contact with, or in close proximity with the lower blade surface, with the treatment fluid applied to the cut exposed interior vertical pores of the cut stems **146** of the vegetation at the moment that the vegetation is initially cut. The transfer of fluid to the cut stems occurs regardless of the speed of rotation of the cutting blade, or the ground speed of the mower, or the orientation of the cutting blade relative to the FLO-THRU CELLS^{™}. Accordingly, the treatment fluid is absorbed into the interior vertical pores of the plants when vegetation is initially cut by the cutting blade. Also, no wastage of treatment fluid occurs, because the fluid is not sprayed or wasted by excess application on the ground or on the exterior, uncut surfaces of vegetation or brush.

Each fluid dispenser bar **120** is adjustable so that as the blades are worn down from use, with resulting erosion of cutting edges, the dispenser bar **120** can be turned or pivoted so that they are aligned with, and continue delivering treatment fluid to the leading/cutting **128** edge of the lower **126** surface of each of the blades. The adjustment mechanism is an adjustment opening or groove **138, 138'** in each side of the central blade shaft **119**, as shown in FIG. 11. The ability to loosen bolts, and pivot the dispenser bar **120** within the limits of the adjustment groove **138, 138',** allows for continued use of the dispenser bar **120** and cutting blades even as the cutting edge **128** is worn, to delay the replacement of each cutting blade.

The fluid treatment system can be selectively operated by the operator, or automatic distribution of treatment fluid may be controlled by control means **152** such as computer software that monitors the rate of travel of the tractor, the velocity of blade rotation, the amount of treatment fluid to be administered per blade, and the combination of treatment fluids and fertilizers to be mixed and administered. A single cell **112** may also be utilized if it is desired to apply a predetermined number of FLO-THRU CELLS^{®} containing the same treatment fluid or a suspension of particles in fluid to an area, or if it is desired to apply different treatment fluids to the same area. For example, a first FLO-THRU CELL'" pre-filled with a fluid crabgrass herbicide treatment may be used to simultaneously apply crabgrass herbicide to the remaining stems of the vegetation at the same time that the vegetation is cut. Additional FLO-THRU CELL^{™}s may be mounted on the tractor to multiple fluids for mixing and for flushing fluid conduit lines. The FLO-THRU CELL^{™} containing the cleansing solution may then be removed and replaced with additional FLO-THRU CELL^{™} containing a fluid fungicide. The height of the cutting blades **18, 20**, **22** above the surface of the ground may be adjusted and lowered to expose the remaining cut stems to the cutting blades, and the herbicide or fungicide is applied as the vegetation is cut again.

Flow control means **152** comprises a control unit which is preferably powered by a power source from the tractor, such as 12 volt battery. The control unit of flow control means is electrically coupled to a ground speed detection means preferably located on the rear axle of tractor adjacent each wheel.

The fluid treatment control unit includes gauges that enable the operator to visually confirm the flow of fluid to the cutting blades. The fluid treatment system includes a speedometer connected to the pump. A gauge mounted in the tractor cab and connected to the speedometer indicates to the operator whether or not the pump is operating properly. The fluid storage, transfer, and treatment system also includes a gravity switched flow indicator (not shown) connected to the fluid lines. A gauge mounted in the tractor cab indicates to the operator whether or not fluid is flowing through the fluid lines.

A method for clearing brush and cutting vegetation from land utilizing a brush-cutting mower is inherently disclosed, including the steps of providing a mower, the mower having a self-propelled tractor attachable to the mower, attaching a plurality of cutting blades to the mower, and rotating the plurality of cutting blades during operating of the mower, with power provided to the mower by the self-propelled tractor. As the cutting blades are rotated during the rotating step, a simultaneous step of pumping vegetation treatment fluid through the rotating cutting blades occurs, with the amount and frequency of pumping of treatment fluid controllable by the operator of the self-propelled tractor. As the vegetation treatment fluid is pumping to, and over the lower surfaces of the plurality of cutting blades, the blades are cutting brush and vegetation, with the step of applying vegetation treatment fluid on cut brush and vegetation occurs simultaneously with the cutting step. As the vegetation treatment fluids are pumping to, and over the lower surfaces of cutting blades, at least one peristaltic pump is accurately metering ultra-low volumes of treatment fluids for direct and simultaneous applying to the cut ends of the brush and vegetation exposed to the cutting blades. Therefore, the method of clearing brush and cutting vegetation provides for simultaneous cutting with three pairs of blades as vegetation treatment fluids are applied to the cut open ends at the time of initial cutting, providing for highly effective application of treatment fluids into the vascular system of plants without over-spraying of treatment fluids onto the ground, into the air, or into surface waters.

### ALTERNATIVE EMBODIMENTS

The above described brush-cutting mower **10,** having a mower deck that may be attachable to either the front or the rear of a tractor **15,** may have one or more "bush-hog" like blades underneath the mower deck, in place of the three pairs of blades **18, 20, 22** as described above. The "bush-hog" like blades are composed of a middle blade support section connected to a centrally connected rotatable spindle, with a lower cover plate **140** underneath the centrally connected spindle. Each opposing end of the middle blade support section has connected to the end, by a bolt, a swiveling blade that extends outward from each opposing end, and swivels while the middle blade support section rotates. Underneath each of the attaching bolts for each opposing end is located a "flying saucer" round shaped fluid dispensing bar of the BURCH WET BLADE^{®} system. Fluid is transferred from the centrally connected spindle, through tubing conduits in the middle blade support section, to each round shaped fluid dispensing bar. The round shaped fluid dispensing bar has at least one outlet for treatment fluid to be applied on the lower surface of each swiveling blade, similar to the application of treatment fluid from the fluid dispensing bar **120** of the preferred embodiment. As the swiveling blade swivels and cuts vegetation, brush, and small trees, the treatment fluid on the lower surface of each blade is applied at the instant of cutting to the cut open pores of the vegetation. During the fleeting moment after cutting, the applied treatment fluid is sucked down into the exposed cut pores of the vegetation stems and into the vascular system of a plant, thereby allowing the rapid distribution of treatment fluid throughout the plant and into the roots of the plant, avoiding past practices of only superficial application of herbicides and pesticides to the exterior surfaces of vegetation. Significantly less treatment fluids are dispensed with improved control of vegetation and less frequency of mowing.

An additional embodiment includes a hydraulic drive means including a hydraulic pump located on the tractor **15,** and a hydraulic motor attached to and driving the input shaft of the right angle gear box **100** providing hydraulic drive power to the driver pulley **94,** thereby driving the one-belt drive apparatus. The hydraulic motor is connected to the hydraulic pump by high pressure lines anchored to a structure such as the three-point linkage or a boom arm, and the hoses may flex as the boom arm or other linkage is manipulated.

### SUMMARY OF THE ACHIEVEMENT

### OF THE OBJECTS OF THE INVENTION

From the foregoing, it is readily apparent that I have invented an apparatus for efficiently cutting brush and vegetation, with simultaneous application of treatment liquids to the cut ends of brush and vegetation as the multiple blade mower operates. The invented apparatus is a relatively inexpensive multiple blade brush-cutting mower that provides a consistent blade exposure. The brush-cutting mower can be attached to either the front end or rear end of a standard tractor and provides a cut path width at least as wide as the width of the tractor. The invented brush-cutting mower is more easily maintainable and repairable than a single blade mower of equal cutting width. The invented brush-cutting mower and treatment fluid application apparatus and method provides for efficient application of vegetation treatment fluids without wastage of treatment fluids onto the ground or onto the exterior sides of vegetation.

It is to be understood that the foregoing description and specific embodiments are merely illustrative of the best mode of the invention and the principles thereof, and that various modifications and additions may be made to the apparatus by those skilled in the art, without departing from the scope of the appended claims.

## Claims

1. A mower (10) for cutting vegetation and dispensing fluid, comprising;
a convertible deck (24), said convertible deck (24) having a main deck (26) and a clam shell portion (28), said clam shell portion (28) being forwardly attachable to said main deck (26);
a radiused distal edge (38) of said main deck (26), to which is attachable a radiused proximal edge (40) of said clam shall portion (28), wherein said clam shell portion (28) extends beyond said radiused distal edge of said main deck (26); and
a means for securing the mower to a standard tractor (15);
wherein said clam shell portion (28) is openable between a closed position and an open position where said plurality of cutting blades are uniformly exposed,
**characterized in that**
the mower further comprises
a plurality of rotatable spindles (80, 82 and 84) mounted to the underside of said main deck (26);
a plurality of pairs of cutting blades (18, 20 and 22) each of said pairs of cutting blades connected by respective central blade shafts (119), each of said shafts mounted respectively to each one of said plurality of rotatable spindles;
means for rotating said plurality of pairs of cutting blades; and
a means for applying treatment fluid to a lower surface of each of said plurality of cutting blades, said treatment fluid remains on said lower surface of each blade until said blade cuts vegetation, when said treatment fluid is applied to said cut vegetation at the moment of first cutting ;
wherein said plurality of cutting blades form a continuous blade path at least as wide as the width of the tractor (15); and wherein
said pairs of cutting blades (18, 20 and 22) further comprises at least two cutting blades interconnected by angled junctions (136) to said central blade shaft (119); said blades, angled junctions, and central blade shaft rotatable as one unit, said angled junctions (186) extending down and outward from a midpoint opening of said central blade shaft of each blades;
a leading edge (128) of each of said blades, said leading edge curving downward to form said lower surface (126) of each said blades;
a trailing edge (130) of each of said blades, said trailing edge curving upward away from said lower surfaces (126);
an upper surface (132) of each of said blades, said upper surface curves upward from said leading edge (128) to said upward curving trailing edge (130).

2. The mower (10) for cutting vegetation and dispensing fluid of claim. 1, wherein said spindles (80, 82 and 84) are spaced across the width of said underside of said main deck (26), with each of said plurality of cutting blades (18, 20 and 22) connected in pairs to a distal spindle end of each of said spindles, said distal spindle end underneath said main deck (26) for each of said plurality of spindles.

3. The mower (10) for cutting vegetation and dispensing fluid of claim 2, wherein said applying means further comprises:
a plurality of conduits for delivery of treatment fluid from a treatment fluid reservoir to a proximal end of each of said spindles (80, 82 and 84);
an internal conduit for fluid within each of said spindles;
a fluid dispenser bar (120) connected at a central point to a distal end of each of said spindles, said dispenser bar (120) receiving fluid from a respective spindle, said dispenser bar located underneath each pair of cutting blades;
at least two conduits internal to said dispenser bar, said conduits radiating outward from said central point to corners of said dispenser bar (120); and
at least two outlet ports (144) in opposing ends of said dispenser bar.

4. The mower (10) for cutting vegetation and dispensing fluid of claim 3, wherein said at least two outlet ports (144) are oriented a distance interior to said angled junction of said cutting edge, the distance interior is in the range of approximately 9.5 millimeter (0.375 inch) to approximately 15.875 millimeter (0.625 Inch) inward from said angled junction of said cutting edge, with said outlet ports (144) aligned in the range of approximately 19.050 millimeter (0.75 inch) to approximately 31.75 millimeter (1.25 inch) back from said leading edge of each of said central blade shafts (119).

5. The mower (10) for cutting vegetation and dispensing fluid of claim 4, wherein said distance interior to said angled junction of said cutting edge is approximately 12.7 millimeter (0.5 inch) inward, and said outlet ports are aligned approximately 25.4 millimeter (1.0 inch) back from said leading edge of each of said central blade shafts (119).

6. The mower (10) for cutting vegetation and dispensing fluid of claim 1, wherein said applying means further comprises at least one treatment fluid reservoir mounted on said tractor (15), said at least one reservoir is connectable in series or in parallel to another treatment fluid reservoir mounted on said tractor (15).

7. The mower (10) for cutting vegetation and dispensing fluid of claim 6, wherein said applying means further comprising:
pumping means for pumping said treatment fluid from a fluid container (122) to said plurality of cutting blades (18,20 and 22); and
flow control means coupled to said pumping means for metering an amount of treatment fluid, said amount of treatment fluid delivered to said plurality of cutting blades through said plurality of conduits.

8. The mower (10) for cutting vegetation and dispensing fluid of claim 7, wherein said pumping means further comprising:
a pump to move said treatment fluid from said fluid container (122) to said plurality of cutting blades; and
a flow control means coupled to said pump, said control means meters the amount of the treatment fluid to said lower surface of each of said plurality of cutting blades;
whereby said control means meters between approximately 0.946 liter/4046,9 m² (0.25 gallons/acre) to approximately 9.46 liter/4046,9 m² (2.5 gallons/acre) of treatment fluid in total, during cutting and applying to vegetation, said fluid applied is a total volume as applied to each acre of vegetation, as cut by said plurality of pairs of cutting blades.

9. The mower (10) for cutting vegetation and dispensing fluid of claim 8, wherein said treatment fluid is continuously applied to the cut vegetation from said lower surface of each of said plurality of cutting blades (18, 20 and 22) at the time of cutting, and said treatment fluid is absorbed directly into the interior vertical pores of the cut vegetation.

10. The mower (10) for cutting vegetation and dispensing fluid of claim 9, wherein said continuously applied treatment fluid is absorbed at between about 90 percent and about 95 percent of said treatment fluid applied from said lower surface of each of said plurality of cutting blades to the cut vegetation.

11. The mower (10) for cutting vegetation and dispensing fluid of claim 1, wherein said mower further comprising:
at least one blade belt drive, said blade belt drive rotatably mounted to said mower main deck (26);
a continuous belt connectable to said blade belt drive;
each of said rotatable spindles (80, 82 and 84), each of said spindles connectable to said continuous belt;
wherein said main deck (26) is substantially planar; and
wherein each pair of said plurality of pairs of cutting blades is separately rotatably mounted to one af said plurality of blade spindles.

12. The mower (10) for cutting vegetation and dispensing fluid of claim 1, wherein said clam shell portion (28) is movable.

13. The mower (10) for cutting vegetation and dispensing fluid of claim 1, wherein said means for securing the mower is connectable to either a front end or rear end of a standard tractor (15), said securing means further comprising a three-point hitch from said convertible deck (24), said three-point hitch including at least one hydraulic piston for adjustment of the height of said convertible deck (24).

## Patentansprüche

1. Mäher (10) zum Schneiden von Vegetation und zum Ausgeben von Fluid, mit:
einem umrüstbaren Mähwerksgehäuse (24), wobei das unmrüstbare Mähwerksgehäuse (24) ein Hauptmähwerksgehäuse (26) und ein Schalenteil (28) aufweist, wobei das Schalenteil (28) vorn an dem Hauptmähwerksgehäuse (26) anbringbar ist;
einem gerundeten distalen Rand (38) des Hauptmähwerksgehäuses (26), an welchem ein gerundeter proximaler Rand (40) des Schalenteils anbringbar ist, wobei das Schalenteil (28) sich über den gerundeten distalen Rand des Hauptmähwerksgehäuses (26) hinaus erstreckt; und
einer Einrichtung zum Befestigen des Mähers an einem standardmäßigen Traktor (15);
wobei das Schalenteil (28) zwischen einer geschlossenen Position und einer offenen Position geöffnet werden kann, in welcher die mehreren Schneidklingen gleichmäßig frei liegen,
**dadurch gekennzeichnet, dass** der Mäher ferner aufweist:
mehrere drehbare Wellen (80, 82 und 84), die an der Unterseite des Hauptmähwerksgehäuses (26) angebracht sind;
mehrere Paare von Schneidklingen (18, 20 und 22), wobei jedes der Schneidklingenpaare durch jeweilige mittige Klingenschäfte (119) miteinander verbunden ist, wobei jeder der Schäfte jeweils an einer der mehreren drehbaren Wellen angebracht ist;
Einrichtungen zum Drehen der mehreren Schneidklingenpaare; und
eine Einrichtung zum Aufbringen von Behandlungsfluid auf die Unterseite jeder der mehreren Schneidklingen, wobei das Behandlungsfluid auf der Unterseite jeder Schneidklinge verbleibt, bis die Klinge Vegetation schneidet, wenn das Behandlungsfluid auf die geschnittene Vegetation zum Zeitpunkt des ersten Schnitts aufgebracht wird;
wobei die mehreren Schneidklingen eine durchgehende Klingenbahn bilden, welche zumindest so breit wie die Breite des Traktors (15) ist, und wobei
die Schneidklingenpaare (18, 20 und 22) ferner mindestens zwei Schneidklingen umfassen, die über abgewinkelte Verbindungsbereiche (136) mit dem mittigen Klingenschaft (119) verbunden sind, wobei die Klingen, die abgewinkelten Verbindungsbereiche (136) und der mittige Klingenschaft als eine Einheit drehbar sind, wobei sich die abgewinkelten Verbindungsbereiche (136) von einer Mittenöffnung des mittigen Klingenschafts jeder Klinge nach unten und nach außen erstreckt;
eine Vorderkante (128) jeder der Klingen, wobei die Vorderkante zur Bildung der Unterseiten (126) jeder der Klingen nach unten gebogen verläuft;
eine Hinterkante (130) jeder der Klingen, wobei die Hinterkante von den Unterseiten (126) weg nach oben gebogen verläuft;
eine Oberseite (132) jeder der Klingen, wobei die Oberseite von der Vorderkante (128) aus zu der nach oben gebogenen Hinterkante (130) nach oben gebogen verläuft.

2. Mäher (10) zum Schneiden von Vegetation und zum Aufbringen von Fluid nach Anspruch 1, bei welchem die Wellen (80, 82 und 84) über die Breite der Unterseite des Hauptmähwerkgehäuses (26) mit gegenseitigem Abstand angeordnet sind, wobei jede der mehreren Schneidklingen (18, 20 und 22) paarweise mit einem distalen Wellenende jeder der Wellen verbunden ist, wobei sich das distale Wellenende jeder der mehreren Wellen unter dem Hauptmähwerksgehäuse (26) befindet.

3. Mäher (10) zum Schneiden von Vegetation und zum Aufbringen von Fluid nach Anspruch 2, bei welchem die Aufbringeinrichtung ferner umfasst:
mehrere Leitungen zum Zuführen von Behandlungsfluid aus einem Behandlungsfluidtank zu einem proximalen Ende jeder der Wellen (80, 82 und 84);
einer inneren Fluidleitung im Inneren der Wellen;
eine Fluidausgabeleiste (120), die an einem zentralen Punkt mit dem distalen Ende jeder der Wellen verbunden ist, wobei die Ausgabeleiste (120) Fluid von einer jeweiligen Welle erhält, wobei die Ausgabeleiste unter jedem Schneidklingenpaar angeordnet ist;
mindestens zwei in der Ausgabeleiste verlaufende Leitungen, wobei die Leitungen von dem zentralen Punkt aus strahlenförmig nach außen zu Ecken der Ausgabeleiste (120) verlaufen; und
mindestens zwei Auslassöffnungen (144) in gegenüberliegenden Enden der Ausgabeleiste.

4. Mäher (10) zum Schneiden von Vegetation und zum Aufbringen von Fluid nach Anspruch 3, bei welchem die mindestens zwei Auslassöffnungen (144) von dem abgewinkelten Verbindungsbereich der Schneidkante einwärts beabstandet sind, wobei dieser nach innen gerichtete Abstand im Bereich von ungefähr 9,5 Millimeter (0,375 Inch) bis ungefähr 15,875 Millimeter (0,625 Inch) einwärts von dem abgewinkelten Verbindungsbereich der Schneidklinge beträgt, wobei die Auslassöffnungen (144) in einem Bereich von ungefähr 19,050 Millimeter (0,75 Inch) bis ungefähr 31,75 Millimeter (1,25 Inch) von der Vorderkante jedes der mittigen Klingenschäfte nach hinten versetzt fluchtend angeordnet sind.

5. Mäher (10) zum Schneiden von Vegetation und zum Aufbringen von Fluid nach Anspruch 4, bei welchem der einwärts von dem abgewinkelten Verbindungsbereich der Schneidkante gerichtete Abstand ungefähr 12,7 Millimeter (0,5 Inch) nach innen beträgt und die Auslassöffnungen ungefähr 25,4 Millimeter (1,0 Inch) von der Vorderkante jedes der mittigen Klingenschäfte (119) nach hinten versetzt fluchtend angeordnet sind.

6. Mäher (10) zum Schneiden von Vegetation und zum Aufbringen von Fluid nach Anspruch 1, bei welchem die Aufbringeinrichtung ferner mindestens einen an dem Traktor (15) befestigten Behandlungsfluidtank aufweist, wobei der mindestens eine Tank in Reihe oder parallel mit einem anderen an dem Traktor (15) angebrachten Behandlungsfluidtank verbindbar ist.

7. Mäher (10) zum Schneiden von Vegetation und zum Aufbringen von Fluid nach Anspruch 6, bei welchem die Aufbringeinrichtung ferner aufweist:
eine Pumpeinrichtung zum Pumpen des Behandlungsfluids von einem Fluidbehälter (122) zu den mehreren Schneidklingen (18, 20 und 22); und
eine mit der Pumpeinrichtung verbundene Durchflussregeleinrichtung zum Dosieren einer Menge des Behandlungsfluids, wobei die Menge des Behandlungsfluids den mehreren Schneidklingen über die mehreren Leitungen zugeführt wird.

8. Mäher (10) zum Schneiden von Vegetation und zum Aufbringen von Fluid nach Anspruch 7, bei welchem die Pumpeinrichtung ferner aufweist:
eine Pumpe zum Bewegen des Behandlungsfluids von dem Fluidbehälter (122) zu den mehreren Schneidklingen; und
eine mit der Pumpe gekoppelte Durchflussregeleinrichtung, wobei die Durchflussregeleinrichtung die Menge des Behandlungsfluids für die Unterseite jeder der mehreren Schneidklingen dosiert;
wobei die Regeleinrichtung während es Schneidens und des Aufbringens auf die Vegetation zwischen ungefähr 0,946 Liter/4046,9 m² (0,25 gal-Ions/acre) bis ungefähr 9,46 Liter/4046,9 m² (2,5 gallons/acre) Behandlungsfluid insgesamt dosiert, wobei das aufgebrachte Fluid der auf jeden Acre der durch die mehreren Schneidklingenpaare geschnittenen Vegetation aufgebrachten Gesamtmenge entspricht.

9. Mäher (10) zum Schneiden von Vegetation und zum Aufbringen von Fluid nach Anspruch 8, bei welchem das Behandlungsfluid beim Schneiden kontinuierlich von der Unterseite jeder der mehreren Schneidklingen (18, 20 und 22) auf die geschnittene Vegetation aufgebracht wird, und das Behandlungsfluid direkt in die inneren vertikalen Poren der geschnittenen Vegetation absorbiert wird.

10. Mäher (10) zum Schneiden von Vegetation und zum Aufbringen von Fluid nach Anspruch 9, bei welchem das kontinuierlich aufgebrachte Behandlungsfluid zu zwischen 90 Prozent und 95 Prozent des von der Unterseite jeder der mehreren Schneidklingen auf die geschnittene Vegetation aufgebrachten Behandlungsfluids absorbiert wird.

11. Mäher (10) zum Schneiden von Vegetation und zum Aufbringen von Fluid nach Anspruch 1, wobei der Mäher ferner aufweist:
mindestens einen Klingen-Riemenantrieb, wobei der Klingen-Riemenantrieb drehbar an dem Hauptmähwerksgehäuse (26) des Mähers angebracht ist;
einen mit dem Klingen-Riemenantrieb verbindbaren Endlosriemen;
jede der drehbaren Wellen (80, 82 und 84), wobei jede der Wellen mit dem Endlosriemen verbindbar ist;
wobei das Hauptmähwerksgehäuse (26) im Wesentlichen eben ist; und
wobei jedes Paar der mehreren Schneidklingenpaare separat drehbar an einer der mehreren Klingenwellen angebracht ist.

12. Mäher (10) zum Schneiden von Vegetation und zum Aufbringen von Fluid nach Anspruch 1, bei welchem das Schalenteil (28) bewegbar ist.

13. Mäher (10) zum Schneiden von Vegetation und zum Aufbringen von Fluid nach Anspruch 1, bei welchem bei welchem die Einrichtung zum Befestigen des Mähers mit entweder dem vorderen Ende oder dem hinteren Ende eines standardmäßigen Traktors (15) verbindbar ist, wobei die Befestigungseinrichtung ferner eine von dem umrüstbaren Mähwerksgehäuse (24) ausgehende Dreipunkt-Anhängekupplung aufweist, wobei die Dreipunkt-Anhängekupplung mindestens einen Hydraulikkolben zum Einstellen der Höhe des austauschbaren Mähwerksgehäuses (24) aufweist.

## Revendications

1. Faucheuse (10) pour couper de la végétation et pour délivrer du fluide, comprenant:
un toit de faucheuse convertible (24), ledit toit de faucheuse (24) comprenant un toit de faucheuse principal (26) et une partie d'enveloppe (28) apte à être attachée à l'avant du toit de faucheuse principal (26);
un bord distal courbé (38) du toit de faucheuse principal (26) auquel l'on peut attacher un bord proximal courbé (40) de la partie d'enveloppe (28), la partie d'enveloppe (28) s'étendant au delà du bord distal courbé du toit de faucheuse principal (26); et
un moyen pour fixer la faucheuse à un tracteur standard (15);
ladite partie d'enveloppe (28) étant apte à être ouverte entre une position fermée et une position ouverte, dans laquelle les plusieurs lames de coupe sont exposées uniformément,
**caractérisée en ce que** la faucheuse en outre comprend:
plusieurs d'arbres rotatifs (80, 82 et 84) attachés à la face inférieure du toit de faucheuse principal (26);
plusieurs paires de lames de coupe (18, 20 et 22), les lames de chaque paire de lames de coupe étant liées entre elles par des tiges de lame centrales (119), chaque tige de lame centrale respective étant attachée à une des plusieurs arbres rotatifs;
moyens pour faire tourner les plusieurs paires de lames de coupe; et
un moyen pour appliquer un fluide de traitement sur une face inférieure de chacune des plusieurs lames de coupe, ledit fluide de traitement restant sur la face inférieure de chaque lame jusqu'à ce que cette lame a coupé de la végétation, le fluide de traitement étant appliqué à la végétation coupée au moment de première coupe;
les plusieurs lames de coupe formant une voie de lames continue au moins aussi large que la largeur du tracteur (15); et
des paires de lames de coupe (18, 20 et 22), en outre comprenant au moins deux lames de coupe reliées entre elles à la tige de lame centrale (119) par des jonctions (136) coudées, les lames, les jonctions coudées et les tiges de lame centrales étant rotatifs ensemble, les jonctions coudées (136) s'étendant vers le bas et vers l'extérieur a partir d'une ouverture centrale de la tige de lame centrale de chaque lame;
une arête avant (128) de chaque lame, l'arête avant étant courbée vers le bas pour former la surface inférieure (126) de chaque lame;
une arête arrière (130) de chaque lame, l'arête arrière étant courbée vers le haut s'éloignant de la face inférieure (126);
une face supérieure (132) de chaque lame, la face supérieure étant courbée vers le haut à partir de l'arête avant (128) jusqu'à l'arête arrière (130) courbée vers le haut.

2. Faucheuse (10) pour couper de la végétation et pour délivrer du fluide selon la revendication 1, dans laquelle lesdits arbres (80, 82 et 84) sont espacés sur la largeur de la face inférieure du toit de faucheuse principal (26), chacune des plusieurs lames de coupe (18, 20 et 22) étant attachée par paires à l'extrémité distale d'arbre de chaque arbre, l'extrémité distale d'arbre de chacun des plusieurs arbres étant située sous le toit de faucheuse principal (26).

3. Faucheuse (10) pour couper de la végétation et pour délivrer du fluide selon la revendication 2, dans laquelle les moyens d'application en outre comprennent:
plusieurs conduites pour délivrer du fluide de traitement d'un réservoir de fluide de traitement vers une extrémité proximale de chaque arbre (80, 82 et 84);
une conduite interne pour fluide dans chaque arbre;
une barre de délivrance de fluide (120) connectée, à un point central, à l'extrémité distale de chaque arbre, la barre de délivrance (120) recevant du fluide à partir d'un arbre respectif, ladite barre de délivrance étant située sous chaque paire de lames de coupe;
a moins deux conduites internes à la barre de délivrance, lesdites conduites rayonnant vers l'extérieur à partir du point central vers les coins de la barre de délivrance (120); et
au moins deux ouvertures de sortie (144) dans des extrémités opposées de la barre de délivrance.

4. Faucheuse (10) pour couper de la végétation et pour délivrer du fluide selon la revendication 3 dans laquelle lesdites au moins deux ouvertures de sortie (144) sont décalées vers l'intérieur relatif à la jonction coudée de l'arête de coupe, le décalage vers l'intérieur étant dans une plage d'environ 9,5 millimètres (0,375 Inch) à environ 15,875 millimètres (0,625 Inch) vers l'intérieur à partir de la jonction coudée de l'arête de coupe, lesdites ouvertures de sortie (144) étant alignées dans une plage d'environ 19,050 millimètres (0,75 Inch) à environ 31,75 millimètres (1,25 Inch) derrière l'arête avant de chaque tige de lame centrale (119).

5. Faucheuse (10) pour couper de la végétation et pour délivrer du fluide selon la revendication 4, dans laquelle le décalage vers l'intérieur relatif à ladite jonction coudée de l'arête de coupe est environ 12,7 millimètres (0,5 Inch) vers l'intérieur, et lesdites ouvertures de sorties sont alignées environ 25,4 millimètres (1,0 Inch) en arrière de l'arête avant de chaque tige de lame centrale (119).

6. Faucheuse (10) pour couper de la végétation et pour délivrer du fluide selon la revendication 1, dans laquelle le moyen d'application comprend en outre au moins un réservoir de fluide de traitement monté sur le tracteur (15), ledit au moins un réservoir étant connectable en série ou en parallèle à un autre réservoir de fluide de traitement monté sur ledit tracteur (15).

7. Faucheuse (10) pour couper de la végétation et pour délivrer du fluide selon la revendication 6, dans laquelle le moyen d'application comprend en outre:
un moyen de pompage pour pomper le fluide de traitement d'un récipient de fluide (122) vers lesdites plusieurs lames de coupe (18, 20 et 22); et
un moyen de commande de débit couplé au moyen de pompage pour doser une quantité de fluide de traitement, ladite quantité de fluide de traitement étant délivré aux plusieurs lames de coupe à travers lesdites plusieurs conduites.

8. Faucheuse (10) pour couper de la végétation et pour délivrer du fluide selon la revendication 7, dans laquelle le moyen de pompage comprend en outre:
une pompe pour mouvoir ledit fluide de traitement du récipient de fluide (122) vers les plusieurs lames de coupe; et
un moyen de commande de débit couplé à la pompe, ledit moyen de commande de débit dosant la quantité de fluide de traitement vers la face inférieure de chacune des plusieurs lames de coupe;
le moyen de commande de débit dosant entre environ 0,946 litres/4046,9 m² (0,25 gallons/acre) et environ 9,46 litres/4046,9 m² (2,5 gallons/acre) de fluide de traitement au total en coupant et appliquant à la végétation, le fluide appliqué étant la quantité totale appliquée à chaque acre de végétation coupé par les plusieurs paires de lames de coupe.

9. Faucheuse (10) pour couper de la végétation et pour délivrer du fluide selon la revendication 8, dans laquelle ledit fluide de traitement est appliqué continûment à la végétation coupée à partir de la face inférieure de chacune des plusieurs lames de coupe (18, 20 et 22) au moment de coupure, et ledit fluide de traitement est absorbé directement dans les pores intérieures verticales de la végétation coupée.

10. Faucheuse (10) pour couper de la végétation et pour délivrer du fluide selon la revendication 9, dans laquelle le fluide de traitement continûment appliqué est absorbé de 90 pour cent à 95 pour cent du fluide de traitement appliqué à la végétation coupée à partir de la face inférieure de chacune des plusieurs lames de coupe.

11. Faucheuse (10) pour couper de la végétation et pour délivrer du fluide selon la revendication 1, dans laquelle faucheuse comprend en outre:
au moins une commande de lames à courroie, ladite commande de lames à courroie étant montée de manière rotative au toit de faucheuse principal (26);
une courroie sans fin connectable à ladite commande de lames à courroie;
les arbres rotatifs (80, 82 et 84), chaque arbre étant connectable à la courroie sans fin;
le toit de faucheuse principal (26) étant essentiellement planaire; et
chaque paire des plusieurs paires de lames de coupe étant séparément montée de manière rotative à un des plusieurs arbres de lames.

12. Faucheuse (10) pour couper de la végétation et pour délivrer du fluide selon la revendication 1, dans laquelle la partie d'enveloppe (28) est mobile.

13. Faucheuse (10) pour couper de la végétation et pour délivrer du fluide selon la revendication 1, dans laquelle le moyen pour attacher la faucheuse peut être monté à l'extrémité avant ou bien à l'extrémité arrière d'un tracteur standard (15), le moyen d'attachement en outre comprenant un attelage à trois points s'étendant à partir du toit de faucheuse convertible (24), l'attelage à trois points comprenant au moins un piston hydraulique pour la réglage de la hauteur du toit de faucheuse convertible (24).
